# Europäisches Patentamt
# European Patent Office
# Office européen des brevets

(19)

(11) Veröffentlichungsnummer: **0 164 621**
**B1**

(12)

# EUROPÄISCHE PATENTSCHRIFT

(45) Veröffentlichungstag der Patentschrift:
**20.07.88**

(51) Int. Cl.⁴: **F 16 B 12/24**

(21) Anmeldenummer: **85106268.7**

(22) Anmeldetag: **22.05.85**

(54) **Vorrichtung zum lösbaren Verbinden von Möbeln oder Möbelteilen, insbesondere Sitzmöbeln und deren Teilen.**

(30) Priorität: **14.06.84 DE 8417958 U**

(43) Veröffentlichungstag der Anmeldung:
**18.12.85 Patentblatt 85/51**

(45) Bekanntmachung des Hinweises auf die Patenterteilung:
**20.07.88 Patentblatt 88/29**

(84) Benannte Vertragsstaaten:
**AT BE CH DE FR GB LI NL SE**

(56) Entgegenhaltungen:
**AU-B-444 500**
**DE-A-1 811 379**
**DE-A-2 630 807**
**DE-A-2 701 833**
**DE-A-3 135 692**
**FR-A-2 205 123**
**US-A-3 836 267**

(73) Patentinhaber: **Tillner, Alfred, Richtstättenweg 1A, D-4513 Belm (DE)**

(72) Erfinder: **Tillner, Alfred, Richtstättenweg 1A, D-4513 Belm (DE)**

(74) Vertreter: **Busse & Busse Patentanwälte, Postfach 1226 Grosshandelsring 6, D-4500 Osnabrück (DE)**

LIBER, STOCKHOLM 1988

EP 0 164 621 B1

## Beschreibung

Die Erfindung betrifft eine Vorrichtung zum lösbaren Verbinden von Möbeln oder Möbelteilen, insbesondere Sitzmöbeln und deren Teilen, bestehend aus zwei in einen lösbaren gegenseitigen Befestigungseingriff bringbaren Verbindungsmitteln.

Die Verbindungsmittel, die insbesondere in der Sitzmöbelindustrie zum gegenseitigen lösbaren Verbinden vom Sitzmöbelteilen verwendet werden, bestehen üblicherweise aus Schraube und Mutter die in bekannter Weise unter Einspannung der zu verbindenden Möbelteile im Zuge der Möbelherstellung miteinander verschraubt werden. Dies bringt Nachteile im Arbeitsablauf mit sich, da zum Herstellen der Schraubverbindungen durch Anziehen der Mutter Montageöffnungen in den Möbelteilen belassen werden müssen, die erst nach Herstellen der Schraubverbindung geschlossen werden können. So kann beispielsweise bei der Herstellung eines Polstersessels, an dessen Korpus ein Armlehnenteil anzusetzen ist, der Sitzteil erst dann fertiggepolstert und die Korpusunterseite zugespannt werden, wenn die Verschraubungen zur Verbindung des Armlehnenteils mit dem Sitzteil vorgenommen worden sind.

Der Erfindung liegt die Aufgabe zugrunde, eine Vorrichtung zum lösbaren Verbinden von Möbeln oder Möbelteilen, insbesondere Sitzmöbel und deren Teilen, zu schaffen, durch die der Verbindungsvorgang wesentlich erleichtert ist.

Ausgehend von einer Vorrichtung der eingangs angegebenen Art wird diese Aufgabe nach der Erfindung dadurch gelöst, daß die Verbindungsmittel von einer Klemmplatte mit zwei gegeneinander gerichteten, zwischen sich einen an einer Seite offenen Klemmspalt begrenzenden, federnden Verriegelungszungen und einer mit diesen in Klemmeingriff bringbaren Metallstange gebildet sind, die Metallstange in ihrem einen Endbereich einen Befestigungsschaft für ihre Festlegung an einem Möbelteil und in ihrem anderen Endbereich einen die Verriegelungszungen federnd aufweitenden Klemmschaft umfaßt und daß zum Lösen des Klemmeingriffs die Metallstange zu der offenen Seite des Klemmspaltes hin bis zum Austreten ihres Klemmschaftes aus dem Klemmspalt bewegbar ist.

Bei dieser Ausgestaltung wird die Klemmplatte an einem der beiden miteinander zu verbindenden Möbelteile, z. B. einem Sitzteil, und die Metallstange an dem anderen Möbelteil, z. B. einem Armlehnenteil, im Zuge der Herstellung befestigt, wobei die Klemmplatte an geeigneter Stelle des Möbelkorpus angeschraubt oder -genagelt und die Metallstange mit ihrem Befestigungsschaft mit einer Leiste oder dergleichen Möbelteil für einen Eingriff ihres Klemmschaftes mit den Verriegelungszungen der Klemmplatte fest verbunden wird. Zur gegenseitigen Verbindung der Möbelteile wird einfach die Metallstange mit ihrem Klemmschaft in den von den Verriegelungszungen definierten Klemmspalt eingedrückt, derart, daß die Metallstange in einem sicheren Verriegelungseingriff mit der Klemmplatte gehalten ist. Auf diese Weise entfallen erst nach der Durchführung des Verbindungsvorgangs zu schließende Montageöffnungen der Möbelteile und insbesondere ein Verschrauben von der Innenseite des Sitzteils eines Sessels her. Der Sitzteil kann vielmehr dank der erfindungsgemäßen Verbindungsvorrichtung vor seiner Verbindung mit dem Armlehnenteil bereits fertiggepolstert sein und eine fertig zugespannte Unterseite aufweisen, wobei ferner der anzusetzende Armlehnenteil ebenfalls fertiggepolstert sein kann.

Die erfindungsgemäß Verbindungsvorrichtung ermöglicht es dem Sitzmöbelhersteller ferner, Sitzelemente mit oder ohne Armlehnenteile auszuliefern, wobei im letzteren Fall die Korpusseitenplatten vollständig mit Bezugsstoff bespannt werden. Sofern nachträglich ein Armlehnenteil angebaut werden soll, wird der Bezugsstoff an den entsprechenden Stellen des Möbelkorpus vom Klemmschaft der in den Armlehnenteil eingeschraubten Metallstange durchstoßen. Das Armlehnen-od.dgl. -möbelteil kann dann einfach an den Möbelkorpus angedrückt werden, wobei die Klemmschäfte seiner Metallstangen in den Klemmeingriff mit der jeweiligen Klemmplatte gelangen. In gleicher Weise können Sitzelemente lösbar miteinander vereinigt werden.

Das Lösen der mittels der erfindungsgemäßen Vorrichtung miteinander verbundenen Elemente bzw. Möbelteile kann ohne besondere Werkzeuge und ohne großen Kraftaufwand durch eine Bewegung des zu lösenden Möbelteils nach oben oder unten erfolgen, derart, daß der Klemmschaft der Metallstangen aus dem Klemmspalt der Klemmplatten herausbewegt wird. Von dieser Möglichkeit kann mit Vorteil im Falle einer Reklamation, Reinigung, Reparatur oder allgemein zum Transport der Möbelteile bzw. -elemente Gebrauch gemacht werden.

Weitere Merkmale und Vorteile der Erfindung ergeben sich aus den Ansprüchen und der nachstehenden Beschreibung in Verbindung mit der Zeichnung, in der mehrere Ausführungsbeispiele des Gegenstands der Erfindung schematisch veranschaulicht sind. In der Zeichnung zeigen:

Fig. 1 eine perspektivische Darstellung einer von einer Klemmplatte und einer Metallstange gebildeten Vorrichtung zum lösbaren Verbinden von Möbeln oder Möbelteilen, insbesondere Sitzmöbeln und deren Teilen, im Verbindungszustand,

Fig. 2 die Klemmplatte der Verbindungsvorrichtung nach Fig. 1 im an einem Möbelkorpus befestigten Zustand

Fig. 3 die Verbindungsvorrichtung nach Fig. 1 an Sitzelementen einer Sitzgruppe,

Fig. 4 die Verbindungsvorrichtung nach Fig. 1 an einem Sessel mit einem mit Standfüßen versehenen Armlehnenteil,

Fig. 5 eine Einzelheit der Fig. 4,

Fig. 6 die Verbindungsvorrichtung nach Fig. 1 an einem Sessel mit einem Armlehnenteil ohne Standfüße und

Fig. 7 eine Einzelheit der Fig. 6.

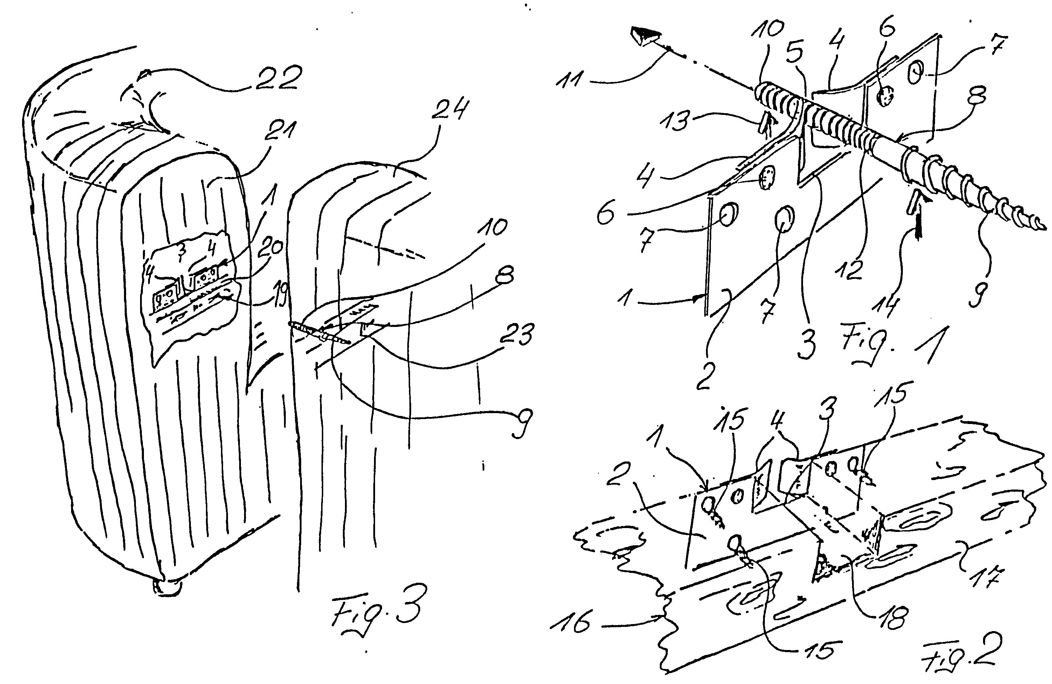

Wie sich zunächst aus Fig. 1 ergibt, umfaßt die Verbindungsvorrichtung eine Klemmplatte 1, die von einer rechteckigen, ebenen Trägerplatte 2 gebildet ist. Die Trägerplatte 2 besteht beispielsweise aus Stahlblech und ist, ausgehend von einer ihrer beiden Längsseitenränder, mit einer U-förmigen Ausnehmung 3 versehen. Beidseits der Ausnehmung 3 sind an der Trägerplatte 2 federnde Verriegelungszungen 4 befestigt, die mit ihren freien Enden gegeneinander gerichtet sind und zwischen sich einen Klemmspalt 5 begrenzen. Die Verriegelungszungen 4 sind von gesonderten Metallteilen, z. B. aus Federstahl, vorzugsweise aus einer einzigen Federstahlplatte durch bereichsweises Ausstanzen und Aufbiegen, gebildet, wobei die Federstahlplatte an der Trägerplatte 2 durch Niete 6 befestigt ist und einen sich entlang der Trägerplatte 2 unterhalb der Ausnehmung 3 erstreckenden Verbindungssteg aufweist. Die Ausnehmung 3 definiert in ihrem mittleren Bereich senkrecht zur Trägerplattenebene die Mittelebene des Klemmspaltes 5 zwischen den Verriegelungszungen 4. Mit Hilfe von paarweise zueinander versetzten Anschraublöchern 7 beidseits der Ausnehmung 3 wird die Trägerplatte 2 an einem Teil des Möbelkorpus für einen Eingriff mit einer Metallstange 8 angeschraubt.

Die Metallstange 8 besteht aus einem Stahlbolzen, der als Befestigungsschaft für eine Festlegung an einem Möbelteil einen Schraubschaft 9 und ferner einen Klemmschaft 10 umfaßt. Der Schraubschaft 9 besitzt bei dem dargestellten Beispiel ein Holzschraubengewinde und ist wie der Schraubschaft einer Holzschraube ausgebildet, Mittels des Schraubschaftes 9 wird die Metallstange 8 in einen Teil des anderen Möbelteils eingeschraubt, derart, daß ihr Klemmschaft 10 von diesem Möbelteil für einen Eingriff mit den Verriegelungszungen 4 der Klemmplatte des einen Möbelteils vorsteht. Dabei kann je nach Anwendungsfall der Schraubschaft 9 anstelle des Holzschraubengewindes ein Metallschraubengewinde nach Art einer Befestigungsschraube aufweisen.

Der Eingriff der Metallstange 8 mit der Klemmplatte 1 wird hergestellt, indem die Metallstange mit ihrem Klemmschaft 10, der Aufbiegungsrichtung der Verriegelungszungen folgend, in den Klemmspalt 5 eingedrückt wird, wie es in Fig. 1 durch den Richtungspfeil 11 veranschaulicht ist. Dabei werden die Verriegelungszungen 4 im Bereich der Ausnehmung 3 vom Klemmschaft 10 federnd aufgeweitet und dadurch in Klemmeingriff mit dem Klemmschaft 10 gehalten. Dieser Klemmeingriff kann auch dadurch herbeigeführt werden, daß die Verriegelungszungen 4 in Richtung senkrecht zur Längserstreckung der Metallstange 8 auf dem Klemmschaft 10 aufgedrückt werden, nachdem dieser in eine Position gegenüber dem Klemmspalt 5 gebracht worden ist.

Der Klemmeingriff zwischen dem Klemmschaft 10 und den freien senkrechten Randkantenbereichen der Verriegelungszungen 4 kann dadurch verbessert werden, daß der Klemmschaft 10 eine Oberflächenprofilierung aufweist. Die Oberflächenprofilierung des Klemmschaftes 10 kann von jeder geeigneten Form einer Oberflächenaufrauhung gebildet sein, wie sie z. B. durch einen Sintervorgang oder eine Riffelung oder Rändelung der Schaftoberfläche erreicht wird. Gute Verankerungsflächen für den gegenseitigen Klemmeingriff können auch dadurch gebildet sein, daß der Klemmschaft entsprechend dem zeichnerisch dargestellten Beispiel eine Oberflächenprofilierung in Form eines Metallschraubengewindes 12 aufweist. Der Klemmschaft 10 ist in diesem Fall vorzugsweise wie eine Befestigungsschraube zum Verbinden von Metallteilen ausgebildet und besitzt ein Außenspitzgewinde.

Das Lösen des Klemmeingriffs der Metallstange 8 mit der Klemmplatte 2 erfolgt durch Abdrücken des Klemmschaftes 10 in vom Grund der Ausnehmung 3 fortweisender Richtung bis zu seinem Austreten aus dem Klemmspalt 5, wie es in Fig. 1 durch den Pfeil 13 veranschaulicht ist. Dabei wird auf den Schraubschaft 9 bzw. das Höbelteil, in den er eingeschraubt ist, Kraft in vom Grund der Ausnehmung 3 fortweisender Richtung ausgeübt, wie dies in Fig. 1 durch den Pfeil 14 veranschaulicht ist, um den Klemmschaft 10 in Richtung des Pfeils 13 aus dem Klemmspalt 5 herauszuheben.

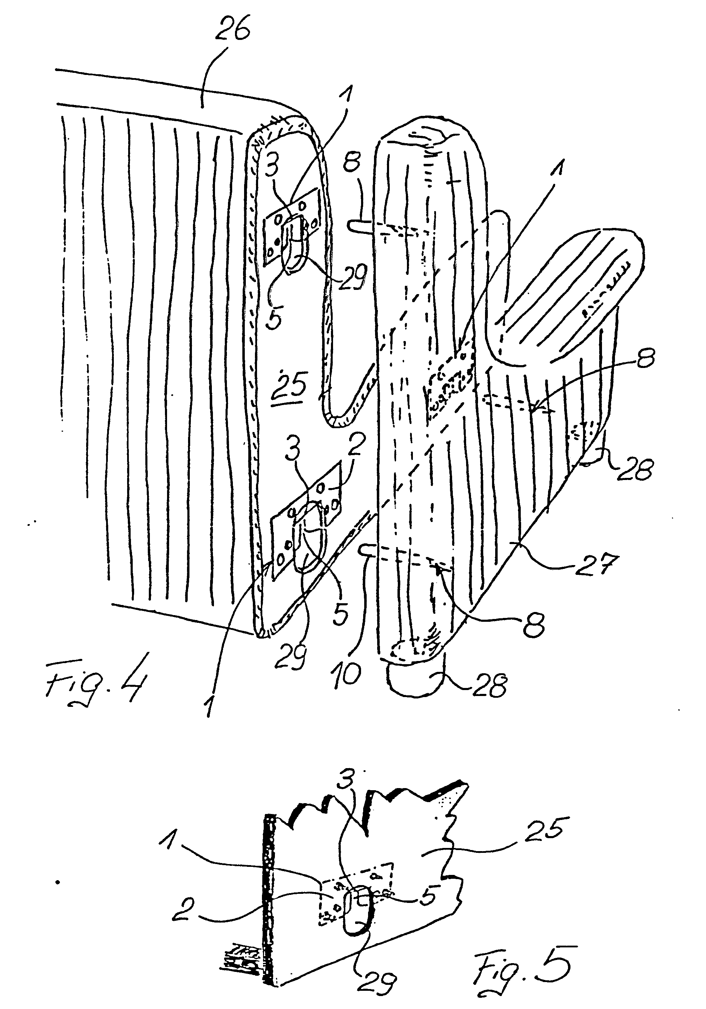

Gemäß der Darstellung in Fig. 2 ist die Trägerplatte 2 der Klemmplatte 1 mittels Schrauben 15 an die Innenseite einer Holzleiste 16 eines Möbelkorpus angeschraubt. In Verlängerung der Ausnehmungs der Trägerplatte 2 ist die Holzleiste 16 bis zu ihrer Außenseite 17 mit einer U-förmigen Nut 18 versehen, durch die der Klemmschaft 10 der Metallstange 8 für seinen Klemmeingriff mit den Verriegelungszungen 4 hindurchbewegbar ist.

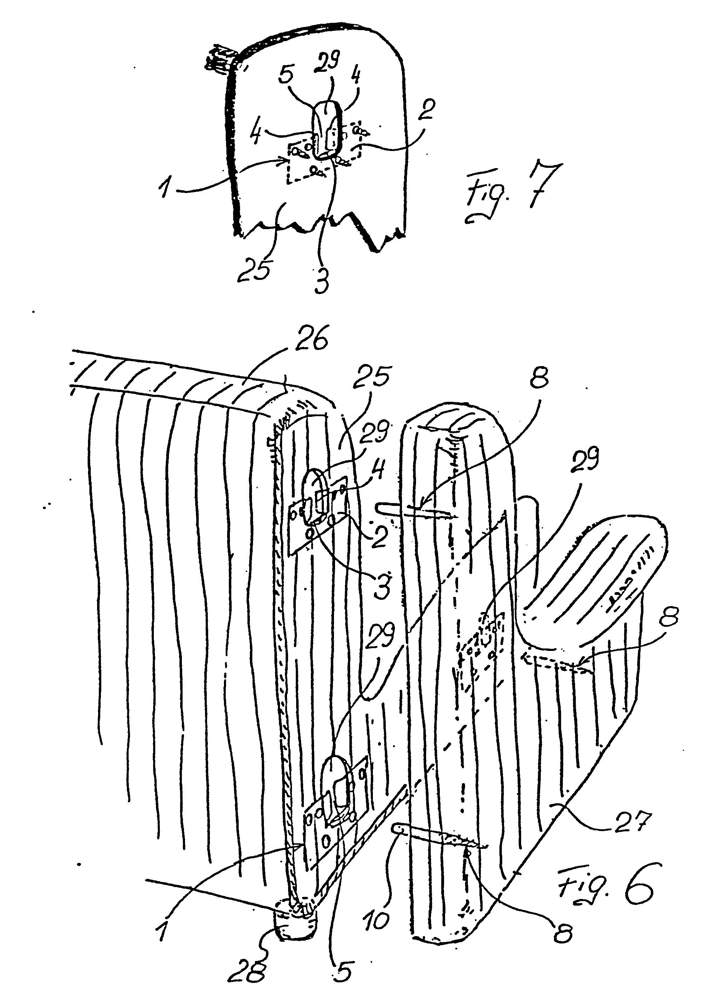

Gemäß der Darstellung in Fig. 3 ist die Trägerplatte 2 der Klemmplatte 1 mittels der vorhandenen Anschraublöcher mit einem oberen Überstand an eine Holzleiste 19 des Möbelkorpus in der Weise angeschraubt, daß der Grund der Ausnehmung 3 mit der Oberseite 20 der Leiste 19 fluchtet. Hierbei kann der Klemmschaft 10 der Metallstange 8 über die Oberseite 20 der Leiste 19 hinweg in Klemmeingriff mit den Verriegelungszungen 4 bewegt werden.

Die Klemmplatte 1 ist bei dem Anwendungsbeispiel nach Fig. 3 am Seitenteil 21 eines Eckteils 22 einer Sitzgruppe angebracht, wobei das Eckteil 22 insgesamt, d.h. unter Einbeziehung des Seitenteils 21, mit Bezugsstoff bespannt ist. Lezterer ist nur in der zeichnerischen Darstellung der Fig. 3 im Bereich der Klemmplatte 1 zu deren Sichtbarmachung entfernt worden. Die Metallstange 8 ist mit ihrem Schraubschaft 9 in eine Holzleiste 23 des Seitenteils eines Sitzelementes 24 eingeschraubt, das mit dem Eckteil 22 verbunden werden soll und ebenfalls bereits vollständig mit Bezugsstoff bespannt ist. Der Klemmschaft 10 der Metallstange 8 besitzt dabei einen Überstand gegenüber der angrenzenden Seitenfläche und wird zur Vereinigung der Teile 22 und 24 zwischen die Verriegelungszungen 4 der Klemmplatte 1 gedrückt. Hierbei kann der Bezugsstoff des Seitenteils 21 vom Klemmschaft 10 durchstoßen werden, um in Eingriff mit den Verriegelungszungen 4 zu gelangen. Die Metallstange 8 kann erst unmittelbar vor dem gewünschten Anschluß an das Eckteil 22 in die Seitenwange des Sitzelements 24 eingeschraubt werden.

Bei dem Ausführungsbeispiel nach den Figuren 4 und 5 sind drei Klemmplatten 1 an einer Seitenwand 25 eines Sitzteils 26 eines Sessels befestigt, und dementsprechend sind in Gegenüberlage zu den Klemmplatten 1 drei Metallstangen 8 in einen Armlehnenteil 27 des zu bildenden Sessels eingeschraubt. Der Sitzteil 26 ist mit Ausnahme seiner Seitenwand 25 fertig mit Bezugsstoff bespannt. In gleicher Weise ist der Armlehnenteil 27 mit Ausnahme seiner der Seitenwand 25 zugewandten Seite fertig mit Bezugsstoff bespannt.

Da bei dem Ausführungsbeispiel nach Fig. 4 der Armlehnenteil 27 mit Standfüßen 28 versehen ist, läßt sich der Klemmeingriff der Metallstange 8 mit der jeweiligen Klemmplatte 1 am einfachsten durch ein Anheben des Sitzteils 26 herbeiführen. Dabei ist die Klemmplatte 1 gegenüber der Anordnung in den Fig. 1 bis 3 um 180° gedreht angebracht, so daß der Grund der Ausnehmung 3 oben liegt. Durch Anheben des Sitzteils 26 wird die Klemmplatte 1 mit ihren Verriegelungszungen 4 vom Klemmschaft 10 abgezogen. Das Herausbewegen des Klemmschaftes 10 aus der Seitenwand 25 ermöglichen langlochartige Öffnungen 29 in der Seitenwand 25, die von dem dem Klemmspalt 5 gegenüberliegenden Aufnahmebereich für den Klemmschaft 10 nach unten verlängert sind.

Bei dem Anwendungsbeispiel nach Fig. 6 und 7 sind die Verhältnisse umgekehrt. Hier sind die Standfüße 28 des Sessels nicht am Armlehnenteil 27, sondern am Sitzteil 26 des Sessels vorgesehen.

Die Seitenwand 25 ist in diesem Fall in die Stoffbespannung des Sitzteils 26 einbezogen. Die Öffnungen 29 im Seitenteil 25 sind von ihrem dem Klemmspalt 5 gegenüberliegenden Bereich nach oben verlängert und ermöglichen ein Herausbewegen des Klemmschaftes 10 der jeweiligen Metallstange 8 aus der Seitenwand 25. Die Anordnung der Trägerplatte 2 ist dabei wie im Falle des Ausführungsbeispiels nach den Fig. 2 und 3 mit von der oberen Längskante der Trägerplatte 2 ausgehender Ausnehmung 3 vorgenommen, so daß sich der Grund der Ausnehmung 3 unten befindet und der Klemmschaft 10 der jeweiligen Metallstange 8 nach oben aus der Seitenwand 25 herausgehoben werden kann. Der Sitzteil 26 wird im Falle des Ausführungsbeispiels nach Fig. 6 mit mit Bezugsstoff bespannter Seitenwand 25 als Sitzelement ausgeliefert, wobei die Anbringung der Klemmplatten 1 und der Ausnehmungen 29 in der Seitenwand 25 unterhalb des zunächst unversehrten Bezugsstoffes auf der Seitenwand 25 das nachträgliche Anbringen des Armlehnenteils 27 gestattet, indem der Bezugsstoff von den Klemmschäften 10 der Metallstangen 8 durchstoßen und deren Klemmeingriff mit den Verriegelungszungen 4 hergestellt wird.

Die Klemmplatten 1 können innenseitig an den Seitenwänden bzw. geeigneten Korpusteilen befestigt sein, so daß eine satte Anlage eines anzuschließenden anderen Möbelteils oder Sitzelementes gewährleistet ist. Je nach dem Anwendungsfall ist jedoch auch eine außenseitige Befestigung der Klemmplatte 1 möglich.

**Patentansprüche**

1. Vorrichtung zum lösbaren verbinden von Möbeln oder Möbelteilen, insbesondere Sitzmöbeln und deren Teil, bestehend aus zwei in einen lösbaren gegenseitigen Befestigungseingriff bringbaren Verbindungsmitteln, dadurch gekennzeichnet, daß die Verbindungsmittel von einer Klemmplatte (1) mit zwei gegeneinander gerichteten, zwischen sich einen an einer Seite offenen Klemmspalt (5) begrenzenden, federnden Verriegelungszungen (4) und einer mit diesen in Klemmeingriff bringbaren Metallstange (8) gebildet sind, die Metallstange (8) in ihrem einen Endbereich einen Befestigungsschaft (9) für ihre Festlegung an einem Möbelteil und in ihrem anderen Endbereich einen die Verriegelungszungen (4) federnd aufweitenden Klemmschaft (10) umfaßt und daß zum Lösen des Klemmeingriffs die Metallstange (8) zu der offenen Seite des Klemmspaltes (5) hin bis zum Austreten ihres Klemmschaftes (10) aus dem Klemmspalt (5) bewegbar ist.

2. Vorrichtung nach Anspruch 1, dadurch gekennzeichnet, daß die Klemmplatte (1) von einer rechteckigen, ebenen, mit einen Möbelkorpus oder -korpusteil verschraubbaren Trägerplatte (2) gebildet und die Trägerplatte (2) mit einer randseitigen Ausnehmung (3) versehen ist, die in ihrem mittleren Bereich senkrecht zur Trägerplattenebene die Mittelebene des Klemmspaltes (5) zwischen den Verriegelungszungen (4) bildet, die von gesonderten Metallteilen beidseits der Ausnehmung (3) gebildet sind.

3. Vorrichtung nach Anspruch 2, dadurch gekennzeichnet, daß die Verriegelungszungen (4) von einer einzigen Federstahlplatte durch bereichsweises Ausstanzen und Aufbiegen gebildet sind und die Federstahlplatte an der Trägerplatte (2) befestigt ist sowie unterhalb der Verriegelungszungen (4) einen sich entlang der Trägerplatte (2) unterhalb deren Ausnehmung (3) erstreckenden Verbindungssteg aufweist.

4. Vorrichtung nach einem der Ansprüche 1 bis 3, dadurch gekennzeichnet, daß der Klemmschaft (10) der Metallstange (8) eine Oberflächenprofilierung aufweist.

5. Vorrichtung nach Anspruch 4, dadurch gekennzeichnet, daß die Oberflächenprofilierung des Klemmschaftes (10) von einem Metallschraubengewinde gebildet ist.

6. Vorrichtung nach einem der Ansprüche 1 bis 5, dadurch gekennzeichnet, daß der Befestigungsschaft (9) von einem Schraubschaft gebildet ist.

7. Vorrichtung nach Anspruch 6, dadurch gekennzeichnet, daß der Schraubschaft (9) der Metallstange (8) von einem Holzschraubenschaft gebildet ist.


**Claims**

1. A device for the detachable connection of pieces of furniture or parts of furniture, particularly seating furniture and parts thereof, consisting of two connecting means which can be brought into detachable mutual fastening engagement, characterised in that the connecting means are formed by a clamping plate (1) with two resilient locking tongues (4), which are directed towards one another and define between them a clamping gap (5) open at one side and by a metal bar (8) which can be brought into clamping engagement with these, the metal bar (8) comprises, in its one end region, an anchoring shank (9) for securing it to part of a piece of furniture and, in its other end region, a wedging shank (10) which resiliently opens out the locking tongues (4), and in that the metal bar (8) is movable towards the open side of the clamping gap (5) until its wedging shank (10) emerges from the clamping gap (5) to release the clamping engagement.

2. A device according to claim 1, characterised in that the clamping plate (1) is formed from a rectangular, plane supporting plate (2) which can be screwed to the body of a piece of furniture or a part of said body and the supporting plate (2) is provided with a marginal recess (3) which, in its central region perpendicular to the plane of the supporting plate forms the median plane of the clamping gap (5) between the locking tongues (4) which are formed from separate metal members at both sides of the recess (3).

3. A device according to claim 2, characterised in that the locking tongues (4) are formed from a single spring-steel plate by localized punching out and bending open and the spring-steel plate is secured to the supporting plate (2) and comprises, below the locking tongues (4), a connecting web extending along the supporting plate (2) below its recess (3).

4. A device according to any one of the claims 1 to 3, characterised in that the wedging shank (10) of the metal bar (8) has surface profiling.

5. A device according to claim 4, characterised in that the surface profiling of the wedging shank (10) is formed by a metal screw thread.

6. A device according to any one of the claims 1 to 5, characterised in that the anchoring shank (9) is formed by a screw shank.

7. A device according to claim 6, characterised in that the screw shank (9) of the metal bar (8) is formed by a wood-screw shank.


**Revendications**

1. Dispositif pour assembler de façon démontable des meubles ou parties de meubles, en particulier des sièges et des éléments de sièges, formé de deux moyens d'assemblage pouvant être amenés dans une position d'engagement de fixation réciproque détachable, caractérisé en ce que les moyens d'assemblage sont formés par une plaque de serrage (1) comportant deux languettes de verrouillage (4) élastiques, orientées l'une vers l'autre, délimitant entre elles une fente de serrage (5) ouverte d'un côté, et par une broche métallique (8) pouvant être amenée en prise de serrage avec ces languettes, la broche métallique (8) présentant, dans sa première zone d'extrémité, une fiche de fixation (9) par laquelle elle est fixée dans une partie de meuble et, dans son autre zone d'extrémité, une fiche de serrage (10) qui écarte élastiquement les languettes de verrouillage (4), et que, pour dégager la broche métallique (8) de la prise de serrage, cette broche peut être déplacée en direction du côté ouvert de la fente de serrage (5) jusqu'à ce que sa fiche de serrage (10) sorte de la fente de serrage (5).

2. Dispositif suivant la revendication 1, caractérisé en ce que la plaque de serrage (1) est formée par une plaque de support rectangulaire plane (2) pouvant être vissée à un corps de meuble ou à une partie de corps de meuble et la plaque de support (2) est pourvue d'une encoche marginale (3) qui, dans sa zone médiane, forme, perpendiculairement au plan de la plaque de support, le plan médian de la fente de serrage (5) entre les languettes de verrouillage (4) qui sont formées par des pièces métalliques distinctes de chaque côté de l'encoche (3).

3. Dispositif suivant la revendication 2, caractérisé en ce que les languettes de verrouillage (4) sont formées par une plaque d'acier à ressorts unique, par estampage local et pliage, et la plaque d'acier à ressorts est fixée sur la plaque de support (2) et présente, en dessous des languettes de verrouillage (4), une entretoise de liaison qui s'étend le long de la plaque de support (2) en dessous de l'encoche.

4. Dispositif suivant l'une quelconque des revendications 1 à 3, caractérisé en ce que la fiche de serrage (10) de la broche métallique (8) présente un profilage superficiel.

5. Dispositif suivant la revendication 4, caractérisé en ce que le profilage superficiel de la fiche de serrage (10) est formé par un filet de vis métallique.

6. Dispositif suivant l'une quelconque des revendications 1 à 5, caractérisé en ce que la fiche de fixation (9) est formée par une tige de vis.

7. Dispositif suivant la revendication 6, caractérisé en ce que la tige de vis (9) de la broche métallique (8) est formée par une tige de vis à bois.

22

24

21

1

20

3 4

4

19

10

8

23

9

Fig. 3

11

10

5

4

6

7

13

8

4

6

7

1

12

2

7

14

3 Fig. 1

9

15

4

3

15

1

15

2

16

15

18

17

Fig. 2

0 164 621

Fig. 4

Fig. 5

Fig. 7

Fig. 6

5